(19) Europäisches Patentamt / European Patent Office / Office européen des brevets

(11) **EP 1 982 429 B1**

(12) **FASCICULE DE BREVET EUROPEEN**

(45) Date de publication et mention de la délivrance du brevet:
**07.07.2010 Bulletin 2010/27**

(21) Numéro de dépôt: **07704435.2**

(22) Date de dépôt: **07.02.2007**

(51) Int Cl.:
*H04B 1/69* *(2006.01)*     *H04J 11/00* *(2006.01)*

(86) Numéro de dépôt international:
**PCT/EP2007/051181**

(87) Numéro de publication internationale:
**WO 2007/090851 (16.08.2007 Gazette 2007/33)**

(54) **Communication à accès multiple basée sur une couche physique ultra large bande par impulsion**

Mehrfachzugangskommunikation auf der Basis einer Impuls-Ultrabreitband-Bitübertragungsschicht

Multiple-access communication based on an impulse ultra wide band physical layer

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2006 FR 0601077**

(43) Date de publication de la demande:
**22.10.2008 Bulletin 2008/43**

(73) Titulaire: **Thales
92200 Neuilly Sur Seine (FR)**

(72) Inventeurs:
• **LE MARTRET, Christophe**
  **F-92300 Levallois Perret (FR)**
• **DELEUZE, Anne-Laure**
  **F-75016 Paris (FR)**
• **CIBLAT, Philippe**
  **F-75020 Paris (FR)**

(74) Mandataire: **Dudouit, Isabelle
Marks & Clerk France
Conseils en Propriété Industrielle
Immeuble " Visium "
22, avenue Aristide Briand
94117 Arcueil Cedex (FR)**

(56) Documents cités:
• **DELEUZE A ET AL: "Time-hopping code characterization for multi-user interference mitigation in ultra wide band impulse radio" SIGNALS, SYSTEMS AND COMPUTERS, 2004. CONFERENCE RECORD OF THE THIRTY-EIGHTH ASILOMAR CONFERENCE ON PACIFIC GROVE, CA, USA NOV. 7-10, 2004, PISCATAWAY, NJ, USA, IEEE, 7 novembre 2004 (2004-11-07), pages 617-621, XP010779897 ISBN: 0-7803-8622-1 cité dans la demande**
• **LE MARTRET C J; DELEUZE A -L; CIBLAT P: "Optimal time-hopping codes for multi-user interference mitigation in ultra-wide bandwidth impulse radio" IEEE TRANSACTIONS ON WIRELESS COMMUNICATIONS, vol. 5, no. 6, 30 juin 2006 (2006-06-30), pages 1516-1525, XP002402926 USA**

**Description**

L'invention concerne notamment un procédé et un système de communication dans un réseau de communications supportant une couche physique de type ultra large bande par impulsions, soit encore respectivement en appellation anglo-saxonne UWB (Ultra Wide Band) et IR (Impulse Radio).

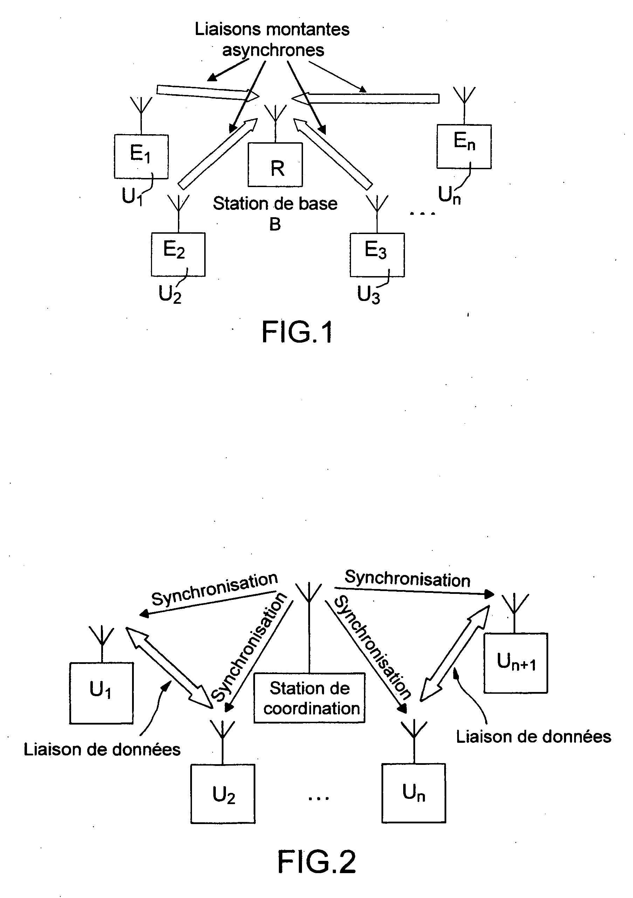

Elle s'applique, par exemple, pour des communications dans un réseau de terminaux potentiellement mobiles, pour lesquels les utilisateurs communiquent soit vers un point central (station de base B) couramment appelée « liaison montante » ou multipoints à point, schématisé à la figure 1 ou soit simultanément deux à deux (liaisons point à point ou peer to peer en anglo-saxon), représenté à la figure 2. Sur les figures 1 et 2, la lettre Ei représente un émetteur, la lettre R un récepteur et les lettres Ui différents utilisateurs, la lettre B la station de base.

Elle s'applique, par exemple, pour un réseau « ad hoc » dont l'organisation locale (sous forme d'agrégat ou cluster en anglo-saxon) permet la désignation d'un noeud (maître ou coordinateur) servant de référence de synchronisation pour les autres noeuds qui lui sont rattachés (figure 2) ou à des réseaux bénéficiant d'une infrastructure de type stations de base pour les réseaux cellulaires (figure 1). On suppose de plus que le type de récepteur utilisé à chaque noeud est un récepteur linéaire de type « rake », décrit par exemple dans le document [1].

Elle concerne à la fois les applications grand public et les applications professionnelles. Pour les applications professionnelles sont, par exemple, concernées les applications de réseaux de capteurs ou nécessitant un déploiement temporaire dans des zones sans infrastructures pour des équipes d'intervention de type sécurité publique (pompiers, médecins, forces spéciales, équipes de maintenance dans des zones à risques, ...). Pour les applications grand public sont, par exemple, concernées les applications de transmissions d'informations multimédias ou de téléphonie visant à remplacer les câbles par des liaisons sans fils.

Une émission large bande ou UWB-IR (ultra wide band Impulse Radio) utilise la totalité de la bande du canal ce qui nécessite l'utilisation d'un duplexage temporel (TDD : Time Division Duplexing en anglo-saxon) pour échanger des données entre deux noeuds. Il en résulte, naturellement, que la méthode d'accès utilisée pour ce genre de transmission est l'accès multiple par répartition de temps (AMRT).

D'autre part, il est connu que les systèmes utilisant l'AMRT sont limités en capacité et le produit nombre d'utilisateurs par le débit utile par utilisateur est constant.

Une manière d'accroître la bande passante d'un tel réseau est, par exemple, de combiner une technique d'accès multiple par répartition de codes (AMRC) à l'AMRT qui permet alors à plusieurs utilisateurs de transmettre pendant un même horizon temporel. L'AMRC en UWB-IR est rendu possible par l'utilisation de codes à sauts temporels (THC : Time Hopping Codes en anglo-saxon).

Comme tous les systèmes à accès multiple à répartition de codes AMRC, l'UWB-IR-THC (utilisation de codes à sauts temporels) souffre du phénomène d'interférence causée par les autres utilisateurs (MUI : Multi-User Interference en anglo-saxon).

D'une manière générale, plusieurs méthodes sont potentiellement possibles pour réduire ou annuler le phénomène d'interférences multi-utilisateurs ou MUI.

Lorsque l'on se restreint à des solutions d'implémentation faible coût, faible consommation, on se ramène alors à des récepteurs linéaires analogiques de type « rake » où la décision est prise sur une combinaison linéaire de versions retardées du signal reçu. Le seul paramètre pertinent laissé dans la conception du système pour l'optimisation des performances est la donnée du code de saut temporel. Il est alors possible de trouver un critère qui permet de minimiser la variance de sortie du MUI à la sortie du récepteur et donc d'assurer les meilleures performances.

La couche physique du système de transmission proposée selon l'invention est, notamment, basée sur la technologie ultra large bande par impulsions UWB-IR.

Le principe de l'UWB-IR est de transmettre l'information au moyen d'impulsions très courtes (de l'ordre de la nanoseconde) en bande de base.

Les systèmes de transmission UWB-IR-THC ont été essentiellement décrits au niveau de la couche physique, par exemple dans le document [1]. L'idée des THC est de transmettre les impulsions en les espaçant temporellement de manière pseudo-aléatoire, chaque utilisateur ayant sa propre séquence. Ceci permet en principe une utilisation de l'UWB dans un contexte multi-utilisateurs asynchrone. L'utilisation de cette couche physique à des systèmes pratiques est décrite par exemple dans les deux articles [2] et [3].

Toutefois, aucune référence de l'art antérieur, ne décrit la manière de réaliser un système à accès multiple basé sur l'utilisation des codes à sauts temporels.

A la connaissance du demandeur, les seules solutions proposées jusqu'à maintenant pour la construction des codes consistent à appliquer les résultats de constructions de codes dédiés à des systèmes de transmissions différents (essentiellement dédiés au saut de fréquence). Un exemple est donné dans le document [4]. Ces codes tombent dans la classe des codes congruents, mais ne respectent pas le critère de minimisation de la variance du MUI considéré ici.

Plus récemment, des travaux publiés dans [5] montrent comment caractériser les meilleurs codes (au sens de la variance minimale du MUI) pour une transmission UWB-IR utilisant une modulation d'amplitude (PAM : Pulse Amplitude Modulation en anglo saxon).

L'idée de la présente invention concerne notamment les systèmes utilisant la modulation par position ou PPM (abrégé anglo saxon de Pulse Position Modulation).

L'invention concerne un procédé de communication à accès multiple dans un réseau centralisé basé sur une couche physique ultra large bande par impulsion permettant un accès multiple par code à sauts temporels, chaque utilisateur étant associé à un code, la transmission s'effectuant de manière asynchrone dans un milieu de propagation à trajets multiples, **caractérisé en ce que** l'on établit un critère afin de trouver les codes des Nu différents utilisateurs permettant de minimiser la variance de l'interférence multi-utilisateurs $J_n$ en sortie d'un récepteur linéaire, le signal reçu r(t) provenant d'un utilisateur s'exprimant sous la forme d'une somme du signal d'intérêt $r_n(t)$ provenant de l'utilisateur n et d'un terme correspondant à l'interférence multi-utilisateurs, $J_n$ où $r(t) = r_n(t) + J_n + n(t)$ avec

$$r_n(t) = \sum_{k=1}^{N_p} A_n^k s_n(t - \tau_n^k)$$ où $A_n^k$ et $\tau_n^k$ sont respectivement l'amplitude et le retard du $k^{\text{ième}}$ trajet du canal de transmission entre l'utilisateur n et le récepteur,
et en ce que pour déterminer les codes des utilisateurs on utilise des inter-corrélations cycliques partielles des codes qui vérifient les critères suivants :

$$\sum_{q=0}^{N_c N_f - 1} [C_{m,n}^{+2}(q) + C_{m,n}^{-2}(q)] = N_f^2 \,,$$

$$\sum_{q=0}^{N_c N_f - 1} C_{m,n}^{+}(q) C_{m,n}^{-}(q) = 0 \,,$$

pour $m = 1, K, N_u$, $n = 1, K, N_u$ et $n \neq m$, où $N_f$ est le nombre de trames, $N_c$ est le nombre de chips, et $N_u$ est le nombre d'utilisateurs transmettant vers le point central ou le nombre de liaisons points à points transmettant simultanément dans un réseau centralisé point à point.

Les communications entre les utilisateurs sont, par exemple, des communications en point à point ou multi-points à point.

L'invention présente notamment, comme avantages, d'obtenir des codes à sauts temporels garantissant des performances élevées, notamment en qualité de service, débit, probabilité d'erreur de fonctionnement ou d'augmenter le nombre d'utilisateurs simultanés.

D'autres caractéristiques et avantages de l'invention apparaîtront mieux à la lecture de la description qui suit donnée à titre illustratif et nullement limitatif annexée des figures qui représentent :

- La figure 1 un réseau de communication comprenant un point central,
- La figure 2 un réseau de communication avec des liaisons point à point, et
- La figure 3 le positionnement des impulsions correspondant à un symbole dans une trame.

Description des codes, critère d'optimisation.

Le signal UWB-IR modulé en impulsions de position ou PPM transmis par l'utilisateur n s'écrit de manière conventionnelle :

$$s_n(t) = \sqrt{P_n T_f} \sum_k w\left(t - kT_f - \delta_n^c(k)T_c - \delta d_n\left(\lfloor k / N_f \rfloor\right) - \theta_n\right) \qquad (1)$$

où $\{\delta_n^c(k), k = 0, K, N_f - 1\}$ est le code de saut temporel de l'utilisateur n à valeurs dans $[0, K, N_c - 1]$, $w(t)$ est l'impulsion d'énergie unité, $P_n$ est la puissance moyenne d'émission, $N_f$ est le nombre de trame par symbole, $T_f$ est la largeur de la trame, $T_c$ est la largeur d'un élément de code plus connu sous le terme anglo-saxon « chip », $\delta$ est l'indice de modulation de la PPM, $d_n(k)$ est la suite de symboles à valeurs dans $\{0,1\}$, $\theta_n$ est une variable aléatoire équirépartie sur $[0, N_f T_f]$ représentant l'asynchronisme entre les utilisateurs, et $\lfloor x \rfloor$ désigne la partie entière de x. L'argument des codes $\tilde{c}_n(k)$ dans (1) est à prendre modulo $N_f$.

On suppose que $N_u$ utilisateurs numérotés de 1 à $N_u$ transmettent en même temps dans un milieu de propagation à trajet multiples.

En se plaçant au niveau d'un récepteur (différent des $N_u$ émetteurs actifs), l'expression du signal reçu est alors donnée par

$$r(t) = \sum_{n=1}^{N_u} r_n(t) + n(t) \tag{2}$$

où $n(t)$ est le bruit au récepteur que l'on suppose blanc et gaussien et $r_n(t)$ est le signal reçu provenant de l'utilisateur $n$ et qui a pour expression :

$$r_n(t) = \sum_{k=1}^{N_p} A_n^k s_n(t - \tau_n^k) \tag{3}$$

où $A_n^k$ et $\tau_n^k$ sont respectivement l'amplitude et le retard du $k^{\text{ième}}$ trajet du canal de transmission entre l'utilisateur $n$ et le récepteur.

On suppose un modèle de canal de transmission très général pour lequel les amplitudes sont à moyenne nulle (i.e. $E_A\left[A_n^k\right] = 0$) et indépendantes (i.e. $E_A\left[A_n^j A_n^k\right] = 0$ quand $j \neq k$). On suppose de plus que les différents paramètres aléatoires du modèle sont indépendants.

Supposons maintenant que l'on cherche à démoduler un utilisateur particulier (on choisira l'utilisateur 1 par la suite). On identifie alors dans le signal reçu (2) le terme d'intérêt $r_1(t)$ :

$$r(t) = r_1(t) + J_1 + n(t), \tag{4}$$

le terme $J_1 = \sum_{n=2}^{N_u} r_n(t)$ s'identifiant alors comme l'interférence multi-utilisateurs.

L'objet de l'invention consiste notamment à établir un critère qui permet de trouver les codes des différents utilisateurs permettant de minimiser la variance de cette interférence afin de garantir les meilleures performances. Il s'agit donc de calculer la variance de $J_1$ par rapport aux paramètres aléatoires du modèle (amplitudes, retards, asynchronisme) en supposant les codes déterministes.

Afin de faciliter le calcul, on représente par exemple (1) sous une forme équivalente, qui permet de sortir la contribution des codes de l'intérieur de l'argument de $w(t)$. La nouvelle représentation s'écrit :

$$s_n(t) = \sqrt{P_n T_f} \sum_{k} \sum_{j=0}^{N_c N_f - 1} c_n(j) w\left(t - kN_f T_f - jT_c - \delta d_n(k) - \theta_n\right)$$

où $\{c_n(j), j = 0, \text{K } N_c N_f - 1\}$ à valeurs dans $\{0,1\}$ sont les codes « développés » déduits de $\left\{\tilde{c}_n(j), j = 0, \text{K } N_f - 1\right\}$, par la relation :

$$c_n(k) = \begin{cases} 1 & \text{si} \quad k = \mathscr{C}_n(j) + jN_c, 0 \le j \le N_f - 1, \\ 0 & \text{ailleurs.} \end{cases} \quad , k = 0, \text{K}, N_c N_f - 1.$$

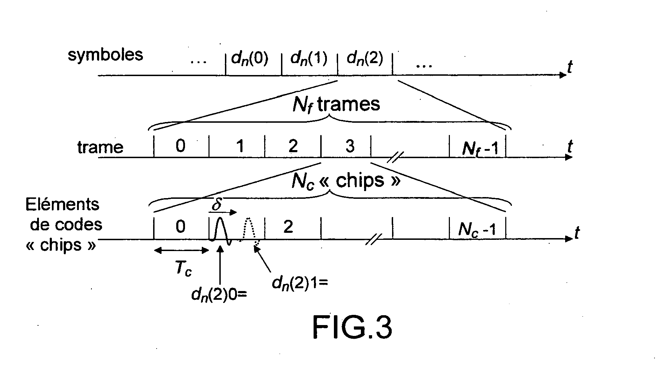

La figure 3 illustre le positionnement des impulsions correspondant à un symbole dans une trame. L'intervalle de temps correspondant à un symbole se divise en $N_f$ trames, chacune contenant une impulsion. La durée d'une trame se divise en $N_c$ « chips », le numéro du « chip » dans lequel est positionnée l'impulsion étant donné par la valeur du code $\mathscr{C}(k)$. La figure 3 montre la position de l'impulsion correspondant au symbole $d_n(2)$ et la trame n°3 qui se situe au « chip » n°2, correspondant à la valeur de code $c_n(2 * N_c N_f + 3 * N_c + 2) = 1$.

Le calcul de la variance de l'interférence multi-utilisateurs est connu de l'Homme du métier et ne sera pas détaillé. Il suit par exemple la démarche indiquée dans [5], à savoir, le calcul successif de l'espérance suivant les variables : amplitudes, symboles et asynchronisme.
On obtient le résultat suivant :

$$V_{\text{MUI}}^{\text{PPM}} = E_{A,d,\theta}[J_1^2] = \Psi_1 \cdot \sum_{n=2}^{N_u} P_n \cdot \phi_n \cdot [\kappa_{1,n} + \overline{\gamma} \cdot \xi_{1,n}] \tag{5}$$

où $\Psi_1$ est une constante dépendante des paramètres du canal de propagation et de la forme de l'impulsion, $\phi_n$ est une constante dépendante des paramètres du canal et $\overline{\gamma}$ est une constante positive dépendante de l'impulsion, avec :

$$\kappa_{m,n} = \sum_{q=0}^{N_c N_f - 1} C_{m,n}^{+2}(q) + C_{m,n}^{-2}(q) \tag{6}$$

$$\xi_{m,n} = \sum_{q=0}^{N_c N_f - 1} C_{m,n}^{+}(q) C_{m,n}^{-}(q), \tag{7}$$

où $C_{m,n}^{+}(q)$ et $C_{m,n}^{-}(q)$ sont les corrélations partielles cycliques entre les codes développés des utilisateurs $m$ et $n$, définies par :

$$C_{m,n}^{-}(q) = \sum_{k=0}^{q-1} c_m(k) c_n(k-q), \tag{8}$$

$$C_{m,n}^{+}(q) = \sum_{k=q}^{N_c N_f - 1} c_m(k) c_n(k-q). \tag{9}$$

Les corrélations partielles étant positives ou nulles, les quantités $\kappa_{m,n}$ et $\xi_{m,n}$ sont aussi positives. Compte tenu de la positivité des variables $P_n$, $\phi_n$ et $\overline{\gamma}$, minimiser (5) suivant les codes revient à rendre minimum chacune des valeurs de l'ensemble $\{\kappa_{1,n} + \overline{\gamma} \cdot \xi_{1,n}\}_{n=2}^{N_u}$. On peut démontrer que les valeurs minimums de $\xi_{1,n}$ et $\kappa_{1,n}$ sont respectivement 0 et $N_f^2$ et qu'elles peuvent atteindre ces valeurs minimums de manière simultanée. Dans ce cas, on a alors minimisé la valeur $\kappa_{1,n} + \overline{\gamma} \cdot \xi_{1,n}$, indépendamment de la valeur $\overline{\gamma}$. Par conséquent, les codes minimisant la variance de l'interférence multi-utilisateurs (5), sont ceux qui vérifient :

$$\xi_{1,n} = 0 \quad \text{et} \quad \kappa_{1,n} = N_f^2, \qquad n = 2, \mathrm{K}, N_u \qquad (10)$$

Il est possible de caractériser ces codes d'une manière plus simple, au travers du lemme (non démontré ici) suivant :

$$\xi_{1,n} \text{ minimum } (\xi_{1,n} = 0) \text{ et } \kappa_{1,n} \text{ minimum } (\kappa_{1,n} = N_f^2) \quad \Leftrightarrow \quad \sum_{q=0}^{N_c N_f - 1} C_{1,n}^2(q) = N_f^2 ,$$

où $C_{m,n}(q) = C_{m,n}^+(q) + C_{m,n}^-(q)$ est l'intercorrélation cyclique entre le code développé de l'utilisateur $m$ et le code de l'utilisateur $n$. Ainsi un critère équivalent à (10) pour décrire l'ensemble des codes qui minimise la variance de l'interférence multi-utilisateur est :

$$\sum_{q=0}^{N_c N_f - 1} C_{1,n}^2(q) = N_f^2 \quad n = 2, \mathrm{K}, N_u . \qquad (11)$$

On peut établir aussi une troisième caractérisation équivalente de l'optimalité des codes :

$$\sum_{k=0}^{N_c N_f - 1} c_1(k) \dot{c}_n(k-q) \le 1, \quad q = 0, \mathrm{K}\, N_c N_f - 1, \quad n = 2, \mathrm{K}, N_u \qquad (12)$$

Les critères (10), (11) et (12) sont équivalents et permettent de vérifier si un code est « optimal » vis à vis de l'utilisateur 1.

Bibliographie

[1] M. Z. Win and R. A. Scholtz, « Impulse radio: how it works », IEEE Com. Letters, vol. 2, no. 2, Feb. 1998, pp. 36-38.

[2] M. Z. Win, X. Qiu, R. A. Scholtz, and V. O. K. Li, « ATM-based TH-SSMA network for multimedia PCS », IEEE JSAC, vol. 17, no 5, May 1999, pp. 824-836.

[3] S. S. Kolenchery, J. K. Townsend, and J. A. Freebersyser, « A novel impulse radio network for tactical military wireless communications », IEEE Milcom Conf., Bedford, MA, USA, Oct. 1998, pp. 59-65.

[4] Ismail Güvenç and Hüseyin Arslan, « Design and performance analysis of TH sequences for UWB-IR systems, », in Proc. IEEE Wireless Commun. Networking Conf. (WCNC), vol. 2, pp. 914-919, Atlanta, GA, 2004.

[5] A-L. Deleuze, C. Le Martret, P. Ciblat, « Time-Hopping Code characterization for multi-user interference mitigation in ultra wide band impulse radio, » Signals, Systems and Computers, 2004. Conference Record of the Thirty-Eight Asilomar Conference on Volume 1, Nov. 7-10, 2004, pp. 617-621.

[6] C. Le Martret, G. B. Giannakis, « All-Digital Impulse Radio with Multiuser Detection for Wireless Cellular Systems », IEEE Trans. on Communications, vol. 50, no 9, pp. 1440-1450, Sept. 2002.

**Revendications**

**1.** Procédé de communication à accès multiple dans un réseau centralisé basé sur une couche physique ultra large bande par impulsion permettant un accès multiple par code à sauts temporels, chaque utilisateur étant associé à un code, la transmission s'effectuant de manière asynchrone dans un milieu de propagation à trajets multiples, **caractérisé en ce que** l'on établit un critère afin de trouver les codes des Nu différents utilisateurs permettant de minimiser la variance de l'interférence multi-utilisateurs $J_n$ en sortie d'un récepteur linéaire, le signal reçu r(t) provenant d'un utilisateur s'exprimant sous la forme d'une somme du signal d'intérêt $r_n(t)$ provenant de l'utilisateur n et d'un terme correspondant à l'interférence multi-utilisateurs, $J_n$ où

$$r(t) = r_n(t) + J_n + n(t)$$

avec

$$r_n(t) = \sum_{k=1}^{N_p} A_n^k s_n(t - \tau_n^k)$$

avec $r_n(t) = \sum_{k=1}^{N_p} A_n^k s_n(t - \tau_n^k)$ où $A_n^k$ et $\tau_n^k$ sont respectivement l'amplitude et le retard du $k^{\text{ième}}$ trajet du canal de transmission entre l'utilisateur $n$ et le récepteur,

et **en ce que** pour déterminer les codes des utilisateurs on utilise des inter-corrélations cycliques partielles des codes qui vérifient les critères suivants :

$$\sum_{q=0}^{N_c N_f - 1} [C_{m,n}^{+2}(q) + C_{m,n}^{-2}(q)] = N_f^2 \,,$$

$$\sum_{q=0}^{N_c N_f - 1} C_{m,n}^+(q) C_{m,n}^-(q) = 0 \,,$$

pour $m = 1, K , N_u$, $n = 1, K, N_u$ et $n \neq m$, où $N_f$ est le nombre de trames, $N_c$ est le nombre de chips, et $N_u$ est le nombre d'utilisateurs transmettant vers le point central ou le nombre de liaisons points à points transmettant simultanément dans un réseau centralisé point à point,

où $C_{m,n}^+(q)$ et $C_{m,n}^-(q)$ sont les corrélations partielles cycliques entre les codes développés des utilisateurs $m$ et $n$, définies par :

$$C_{m,n}^-(q) = \sum_{k=0}^{q-1} c_m(k) c_n(k - q) \,,$$

et

$$C_{m,n}^+(q) = \sum_{k=q}^{N_c N_f - 1} c_m(k) c_n(k - q)$$

2. Procédé selon la revendication 1, **caractérisé en ce que** les communications entre les utilisateurs sont des communications en point à point ou multi-points à point.

3. Procédé selon la revendication 1, **caractérisé en ce que** pour déterminer les codes des utilisateurs on utilise les inter-corrélations des codes qui vérifient le critère suivant :

$$\sum_{q=0}^{N_c N_f - 1} C_{m,n}^2(q) = N_f^2 ,$$

pour $m = 1,K$, $N_u$, $n = 1,K$, $N_u$ et $n \neq m$, où $N_f$ est le nombre de trames, $N_c$ est le nombre de chips, et $N_u$ est le nombre d'utilisateurs transmettant vers le point central (en multipoints à points, ou liaison montante) ou le nombre de liaisons point à point transmettant simultanément dans un réseau centralisé point à point.

4. Procédé selon la revendication 1, **caractérisé en ce que** pour déterminer les codes des utilisateurs on utilise des inter-corrélations des codes vérifiant le critère suivant :

$$\sum_{k=0}^{N_c N_f - 1} c_m(k) c_n(k - q) \leq 1 \qquad q = 0,K \ N_c N_f - 1, ,$$

pour $m = 1,K$, $N_u$, $n = 1,K$, $N_u$ et $n \neq m$, où $N_f$ est le nombre de trames, $N_c$ est le nombre de chips, et $N_u$ est le nombre d'utilisateurs transmettant vers le point central (en multipoints à points ou liaison montante) ou le nombre de liaisons points à points transmettant simultanément dans un réseau centralisé point à point.

**Claims**

1. A multiple access communication process in a centralised network based on an impulse ultra wide band physical layer allowing multiple access by time hopping code, each user being associated with a code, the transmission occurring asynchronously in a multiple path propagation medium, **characterised in that** a criterion is established in order to find the codes of the Nu different users allowing the variance of multi-user interference $J_n$ to be minimised at the output of a linear receiver, the received signal r(t) originating from a user being expressed in the form of a sum of the signal of interest r"(t) originating from the user n and a term corresponding to the multi-user interference $J_n$, where

$$r(t) = r_n(t) + J_n + n(t) ,$$

with

$$r_n(t) = \sum_{k=1}^{N_p} A_n^k s_n(t - \tau_n^k) ,$$

where $A_n^k$ and $\tau_n^k$ are respectively the amplitude and the delay of the kth path of the transmission channel between the user n and the receiver,
and **in that**, in order to determine the user codes, partial cyclic inter-correlations of the codes are used which verify the following criteria:

$$\sum_{q=0}^{N_c N_f - 1} [C_{m,n}^{+2}(q) + C_{m,n}^{-2}(q)] = N_f^2 ,$$

$$\sum_{q=0}^{N_cN_f-1} C_{m,n}^+(q)C_{m,n}^-(q) = 0,$$

for m=1, K, $N_u$, n=1, K, $N_u$ and n ≠ m, where $N_f$ is the number of grids, $N_c$ is the number of chips, and $N_u$ is the number of users transmitting to the central point or the number of peer-to-peer links simultaneously transmitting in a centralised peer-to-peer network,

where $C_{m,n}^+(q)$ and $C_{m,n}^-(q)$ are the partial cyclic correlations between the developed codes of the users m and n, defined by:

$$C_{m,n}^-(q) = \sum_{k=0}^{q-1} c_m(k)c_n(k-q)$$

,

and

$$C_{m,n}^+(q) = \sum_{k=q}^{N_cN_f-1} c_m(k)c_n(k-q)$$

.

2. The process according to claim 1, **characterised in that** communications between the users are peer-to-peer or multipeer-to-peer communications.

3. The process according to claim 1, **characterised in that** in order to determine the user codes, inter-correlations of the codes are used which verify the following criterion:

$$\sum_{q=0}^{N_cN_f-1} C_{m,n}^2(q) = N_f^2$$

,

for m=1, K, $N_u$, n=1, K, $N_u$ and n ≠ m, where $N_f$ is the number of grids, $N_c$ is the number of chips, and $N_u$ is the number of users transmitting to the central point (in multipeer-to-peer or up-link mode) or the number of peer-to-peer links simultaneously transmitting in a centralised peer-to-peer network.

4. The process according to claim 1, **characterised in that** in order to determine the user codes, inter-correlations of the codes are used which verify the following criterion:

$$\sum_{k=0}^{N_cN_f-1} c_m(k)c_n(k-q) \le 1 \qquad q = 0, K\ N_cN_f - 1,,$$

for m=1, K, $N_u$, n=1, K, $N_u$ and n ≠ m, where $N_f$ is the number of grids, $N_c$ is the number of chips, and $N_u$ is the number of users transmitting to the central point (in multipeer-to-peer or up-link mode) or the number of peer-to-peer links simultaneously transmitting in a centralised peer-to-peer network.

**Patentansprüche**

1. Verfahren zur Mehrfachzugangskommunikation in einem zentralisierten Netz auf der Basis einer Impuls-Ultrabreitband-Bitübertragungsschicht, die einen Mehrfachzugriff mit Zeitsprung-Codes zulässt, wobei jeder Benutzer mit einem Code assoziiert ist, wobei die Übertragung asynchron in einem Mehrweg-Ausbreitungsmedium erfolgt, **dadurch gekennzeichnet, dass** ein Kriterium aufgestellt wird, um die Codes von Nu verschiedenen Benutzern zu finden, um die Varianz von Mehrbenutzerinterferenz $J_n$ am Ausgang eines Linearempfängers zu minimieren, wobei das von einem Benutzer kommende Empfangssignal r(t) in Form einer Summe aus dem Signal von Interesse $r_n(t)$ vom Benutzer n und einem Ausdruck gebildet wird, der der Mehrbenutzerinterferenz $J_n$ entspricht, wobei

$$r(t) = r_n(t) + J_n + n(t),$$

mit

$$r_n(t) = \sum_{k=1}^{N_p} A_n^k s_n(t - \tau_n^k),$$

wobei $A_n^k$ und $\tau_n^k$ jeweils die Amplitude und die Verzögerung des k$^{ten}$ Wegs des Übertragungskanals zwischen dem Benutzer n und dem Empfänger sind,
und **dadurch**, dass zum Ermitteln der Benutzercodes zyklische partielle Interkorrelationen der Codes verwendet werden, die die folgenden Kriterien verifizieren:

$$\sum_{q=0}^{N_c N_f - 1} [C_{m,n}^{+2}(q) + C_{m,n}^{-2}(q)] = N_f^2,$$

$$\sum_{q=0}^{N_c N_f - 1} C_{m,n}^{+}(q) C_{m,n}^{-}(q) = 0,$$

für m = 1, K, $N_u$, n = 1, K, $N_u$ und n ≠ m, wobei $N_f$ die Zahl der Raster, $N_c$ die Zahl der Chips und $N_u$ die Zahl der Benutzer sind, die zum zentralen Punkt senden, oder die Zahl der Punkt-zu-Punkt-Verbindungen sind, die gleichzeitig in einem zentralisierten Punkt-zu-Punkt-Netz senden,

wobei $C_{m,n}^{+}(q)$ und $C_{m,n}^{-}(q)$ die partiellen zyklischen Korrelationen zwischen den entwickelten Codes der Benutzer m und n sind, definiert durch:

$$C_{m,n}^{-}(q) = \sum_{k=0}^{q-1} c_m(k) c_n(k - q),$$

und

$$C_{m,n}^{+}(q) = \sum_{k=q}^{N_c N_f - 1} c_m(k) c_n(k - q).$$

2. Verfahren nach Anspruch 1, **dadurch gekennzeichnet, dass** die Kommunikationen zwischen den Benutzern Punkt-zu-Punkt-Kommunikationen oder Mehrpunkt-zu-Punkt-Kommunikationen sind.

3. Verfahren nach Anspruch 1, **dadurch gekennzeichnet, dass** zum Ermitteln der Benutzercodes die Interkorrelationen der Codes verwendet werden, die das folgende Kriterium verifizieren:

$$\sum_{q=0}^{N_c N_f - 1} C_{m,n}^2(q) = N_f^2$$

,

für m = 1, K, $N_u$, n = 1, K, $N_u$ und n ≠ m, wobei $N_f$ die Zahl der Raster, $N_c$ die Zahl der Chips und $N_u$ die Zahl der Benutzer sind, die zum zentralen Punkt senden (Mehrpunkt zu Punkt oder Uplink), oder die Zahl der Punkt-zu-Punkt-Verbindungen, die gleichzeitig in einem zentralisierten Punkt-zu-Punkt-Netz senden.

**4.** Verfahren nach Anspruch 1, **dadurch gekennzeichnet, dass** zum Ermitteln der Benutzercodes Interkorrelationen von Codes verwendet werden, die das folgende Kriterium verifizieren:

$$\sum_{k=0}^{N_c N_f - 1} c_m(k) c_n(k - q) \leq 1 \qquad q = 0, K \ N_c N_f - 1, ,$$

für m = 1, K $N_u$, n = 1, K, $N_u$ und n ≠ m, wobei $N_f$ die Zahl der Raster, $N_c$ die Zahl der Chips und $N_u$ die Zahl der Benutzer sind, die zum zentralen Punkt senden (Mehrpunkt zu Punkt oder Uplink), oder die Zahl der Punkt-zu-Punkt-Verbindungen, die gleichzeitig in einem zentralisierten Punkt-zu-Punkt-Netz senden.

Liaisons montantes
asynchrones

E₁

U₁

R

Station de base
B

E₂

U₂

E₃

U₃

Eₙ

Uₙ

. . .

## FIG.1

Synchronisation

Synchronisation

Synchronisation

Synchronisation

U₁

Station de
coordination

Uₙ₊₁

Liaison de données

Liaison de données

U₂

. . .

Uₙ

## FIG.2

**FIG.3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **M. Z. Win ; R. A. Scholtz.** Impulse radio: how it works. *IEEE Com. Letters,* Février 1998, vol. 2 (2), 36-38
- **M. Z. Win ; X. Qiu ; R. A. Scholtz ; V. O. K. Li.** ATM-based TH-SSMA network for multimedia PCS. *IEEE JSAC,* Mai 1999, vol. 17 (5), 824-836
- **S. S. Kolenchery ; J. K. Townsend ; J. A. Freebersyser.** A novel impulse radio network for tactical military wireless communications. *IEEE Milcom Conf.,* Octobre 1998, 59-65
- **Ismail Güvenç ; Hüseyin Arslan.** Design and performance analysis of TH sequences for UWB-IR systems. *Proc. IEEE Wireless Commun. Networking Conf. (WCNC),* 2004, vol. 2, 914-919

- **A-L. Deleuze ; C. Le Martret ; P. Ciblat.** Time-Hopping Code characterization for multi-user interference mitigation in ultra wide band impulse radio. *Signals, Systems and Computers, 2004. Conference Record of the Thirty-Eight Asilomar Conference,* 07 Novembre 2004, vol. 1, 617-621
- **C. Le Martret ; G. B. Giannakis.** All-Digital Impulse Radio with Multiuser Detection for Wireless Cellular Systems. *IEEE Trans. on Communications,* Septembre 2002, vol. 50 (9), 1440-1450